# EUROPÄISCHE PATENTSCHRIFT

(11) **EP 3 357 630 B1**
(45) Veröffentlichungstag und Bekanntmachung des Hinweises auf die Patenterteilung: **06.11.2024**
(21) Anmeldenummer: 18153785.3
(22) Anmeldetag: 29.01.2018
(51) Int. Cl.: B23P 6/00, F01D 5/00, B23K 9/04, B23K 10/02, B23K 15/00, B23K 26/00, B23K 26/34, B23K 31/02, B23K 31/10, F01D 11/12, F01D 5/28

(54) **VERFAHREN UND VORRICHTUNG ZUM REPARIEREN EINER BESCHÄDIGTEN SCHAUFELSPITZE EINER GEPANZERTEN UND MIT EINER SCHAUFELBESCHICHTUNG VERSEHENEN TURBINENSCHAUFEL**
METHOD AND DEVICE FOR REPAIRING A DAMAGED TIP OF AN HARD FACED TURBINE BLADE WITH A COATING
PROCÉDÉ ET DISPOSITIF DE RÉPARATION D'UN BOUT D'AUBE ENDOMMAGÉE D'UNE AUBE DE TURBINE AVEC UN REVÊTEMENT DUR ET POURVUE D'UN REVÊTEMENT D'AUBE

(30) Priorität: 02.02.2017 DE 102017201645
(43) Veröffentlichungstag der Anmeldung: 08.08.2018
(73) Patentinhaber: MTU Aero Engines AG, 80995 München (DE)
(72) Erfinder: Seidel, Frank, 30938 Grossburgwedel (DE); Weidlich, Nils, 31535 Neustadt (DE)

(56) Entgegenhaltungen:
- EP-A1- 1 143 030
- EP-A1- 2 316 988
- EP-A2- 3 053 702
- US-A- 5 794 338

## Beschreibung

Die Erfindung betrifft ein Verfahren zum Reparieren einer beschädigten Schaufelspitze einer gepanzerten und mit einer Schaufelbeschichtung versehenen Turbinenschaufel einer thermischen Gasturbine. Die Erfindung betrifft weiterhin eine Vorrichtung zum Durchführen eines solchen Verfahrens Ein solches Verfahren und eine solche Vorrichtung sind aus der US 5 794 338 A bekannt.

Gepanzerte und mit einer Schaufelbeschichtung versehene Turbinenschaufeln (sogenannte HPT Blades/high pressure turbine blades) können in der Regel nur wenige Male repariert werden, da es infolge des jeweiligen Materialabtrags beim Entschichten der Bauteile zu einem Wanddicken- und Festigkeitsverlust kommt. Dementsprechend müssen solche Turbinenschaufeln häufig bereits nach wenigen Schadensfällen verschrottet werden, da sie ihre maximale Anzahl an zulässigen Entschichtungen des Schaufelblattes erreicht haben. Dies führt zu hohen Kosten. Zusätzliche Kosten entstehen dadurch, dass die bisherigen Verfahren zur Bauteilreparatur von gepanzerten Turbinenschaufeln, insbesondere von HPT Blades, viele teure Prozessschritte umfassen.

Aus der EP 1 143 030 A1 ist ein Material für eine Spitze einer Turbinenschaufel oder zum Reparieren einer beschädigten Spitze einer Turbinenschaufel mit einer metallischen Beschichtung bekannt. Ebenfalls offenbart ist ein Verfahren zum Herstellen oder Reparieren einer Spitze einer Turbinenschaufel mit einer Metallbeschichtung durch Wiederherstellen der Schaufelspitze mit einem Material, das in der Zusammensetzung dem Metallbeschichtungsmaterial entspricht, das für die Turbinenschaufel verwendet wird, indem das Material mit der beschädigten Spitze verbunden wird.

Aufgabe der vorliegenden Erfindung ist es, ein Verfahren anzugeben, welches häufigere und kostengünstigere Reparaturen von beschädigten Schaufelspitzen von gepanzerten und mit einer Schaufelbeschichtung versehenen Turbinenschaufeln ermöglicht. Eine weitere Aufgabe der Erfindung besteht darin, eine Vorrichtung zum Durchführen eines solchen Verfahrens zu schaffen.

Die Aufgaben werden erfindungsgemäß durch ein Verfahren mit den Merkmalen des Patentanspruchs 1 sowie durch eine Vorrichtung gemäß Patentanspruch 9 gelöst. Vorteilhafte Ausgestaltungen mit zweckmäßigen Weiterbildungen der Erfindung sind in den Unteransprüchen angegeben, wobei vorteilhafte Ausgestaltungen jedes Erfindungsaspekts als vorteilhafte Ausgestaltungen des jeweils anderen Erfindungsaspekts anzusehen sind.

Ein erster Aspekt der Erfindung betrifft ein Verfahren zum Reparieren einer beschädigten Schaufelspitze einer gepanzerten und mit einer Schaufelbeschichtung versehenen Turbinenschaufel einer thermischen Gasturbine. Das Verfahren umfasst erfindungsgemäß die Schritte Entfernen einer Schaufelspitzenpanzerung der Turbinenschaufel zumindest im Bereich der beschädigten Schaufelspitze und Herstellung einer Reparaturoberfläche, Entfernen nur eines Teils der Schaufelbeschichtung der Turbinenschaufel im Bereich der Reparaturoberfläche unter Erhalt eines von der Reparaturoberfläche beabstandeten Teils der Schaufelbeschichtung, Wiederherstellen der Schaufelspitzenpanzerung und Wiederherstellen der Schaufelbeschichtung im Bereich der reparierten Schaufelspitze, wobei zum Wiederherstellen der Schaufelspitzenpanzerung ein Reparaturmaterial durch ein Schweißverfahren und/oder durch ein additives Fertigungsverfahren auf die Reparaturoberfläche aufgebracht wird. Mit Hilfe des erfindungsgemäßen Verfahrens können beschädigte Schaufelspitzen von gepanzerten und beschichteten Turbinenschaufeln mit wenigen, kostengünstig durchführbaren Schritten schnell und zuverlässig repariert werden. Im Unterschied zum Stand der Technik kann dabei auf mehrere Schritte und insbesondere auf das vollständige Entschichten und das spätere vollständige Wiederbeschichten der Turbinenschaufel verzichtet werden, so dass Zeit und Kosten in erheblichem Maße eingespart werden. Da zudem nur ein geringer Teil der Schaufelbeschichtung, die auch als Airfoil-Coating bezeichnet wird, in der Nähe der Reparaturoberfläche entfernt wird, ist die Reparatur der gepanzerten Schaufelspitze nicht mit einem Wanddicken- und Festigkeitsverlust des Schaufelblatts verbunden, wodurch die Anzahl möglicher Reparaturen und damit die Lebensdauer der Turbinenschaufel erheblich gesteigert werden, was zu weiteren erheblichen Zeit- und Kosteneinsparungen führt. Ein weiterer Vorteil besteht in einem besseren Laufzeitverhalten der lokal reparierten Turbinenschaufel infolge der vergleichsweise schonend durchgeführten Reparatur. Weiterhin ist ein Aufbau der ursprünglichen Original- oder Soll-Kontur der Schaufelspitze mit geringer Aufmischung und geringer Wärmeeinflusszone möglich, wodurch die ursprüngliche Form und Belastbarkeit der Turbinenschaufel zuverlässig wiederhergestellt werden. Generell sind "ein"/"eine" im Rahmen dieser Offenbarung als unbestimmte Artikel zu lesen, also ohne ausdrücklich gegenteilige Angabe immer auch als "mindestens ein" / "mindestens eine".

In einer vorteilhaften Ausgestaltung der Erfindung ist vorgesehen, dass das Reparaturmaterial auf die Reparaturoberfläche aufgebracht und eine Soll-Kontur der Schaufelspitze wiederhergestellt wird. Hierdurch kann die ursprüngliche Geometrie der Turbinenschaufel vollständig wiederhergestellt werden.

In einer weiteren vorteilhaften Ausgestaltung der Erfindung ist vorgesehen, dass die Schaufelspitzenpanzerung und/oder die Schaufelbeschichtung zumindest teilweise mittels eines Trennverfahrens entfernt wird. Hierdurch kann die Schaufelspitzenpanzerung in Abhängigkeit des jeweiligen Schadensbildes teilweise oder vollständig entfernt werden. Als Trennverfahren eignen sich insbesondere zerspanende Fertigungsverfahren wie Schleifen. Ebenso kann die Schaufelbeschichtung im Bereich der Schaufelspitze mittels eines Trennverfahrens entfernt werden, um die Turbinenschaufel für das nachfolgende Aufbringen von Reparaturmaterial vorzubereiten.

Weitere Vorteile ergeben sich, indem das Reparaturmaterial durch Auftragsschweißen auf die Reparaturoberfläche aufgebracht wird. Hierdurch ist ein Aufbau der ursprünglichen Original- oder Soll-Kontur der Schaufelspitze mit geringer Aufmischung und geringer Wärmeeinflusszone möglich, wodurch die ursprüngliche Form und Belastbarkeit der Turbinenschaufel zuverlässig wiederhergestellt werden. In einer Ausgestaltung kann die Original- oder Soll-Kontur der Schaufelspitze alleine durch den Schritt des gezielten Aufbringens von Reparaturmaterial wiederhergestellt werden.

In einer weiteren vorteilhaften Ausgestaltung der Erfindung ist vorgesehen, dass die Schaufelbeschichtung nur bis zu einem Abstand von maximal 15 %, das heißt von höchstens 1 %, 2 %, 3 %, 4 %, 5 %, 6 %, 7 %, 8 %, 9 %, 10 %, 11 %, 12 %, 13 %, 14 % oder 15 % der Höhe des Schaufelblatts zur Reparaturoberfläche entfernt wird. Hierdurch wird ein unnötiger Wanddicken- und Festigkeitsverlust des Schaufelblatts verhindert, wodurch die Anzahl möglicher Reparaturen und damit die Lebensdauer der Turbinenschaufel erheblich gesteigert werden.

In einer weiteren vorteilhaften Ausgestaltung der Erfindung ist vorgesehen, dass die Soll-Kontur der Schaufelspitze nach dem Aufbringen des Reparaturmaterials mittels eines Trennverfahrens wiederhergestellt wird. Dies ist insbesondere dann von Vorteil, wenn das Reparaturmaterial zunächst mit einem Übermaß bezogen auf die Original- oder Soll-Kontur der Schaufelspitze aufgebracht wurde und anschließend durch Abtragen von überschüssigem Reparaturmaterial wiederhergestellt wird. Als Trennverfahren eignen sich auch in diesem Fall insbesondere zerspanende Fertigungsverfahren wie Schleifen.

Weitere Vorteile ergeben sich dadurch, dass die Schaufelspitzenpanzerung mittels eines Fügeverfahrens, insbesondere durch Löten, wiederhergestellt wird. Dies ermöglicht eine stoffschlüssige und damit besonders hoch belastbare Verbindung zwischen der Schaufelspitze der Turbinenschaufel und der Schaufelspitzenpanzerung. Insbesondere durch die Verwendung eines Lötverfahrens kann vorteilhaft eine Oberflächenlegierung zwischen dem Schaufel- bzw. Reparaturmaterial und dem Material der Schaufelspitzenpanzerung erzeugt werden, ohne die Turbinenschaufel in der Tiefe aufzuschmelzen. Es kann vorgesehen sein, dass die Schaufelspitzenpanzerung durch Erzeugen und/oder Aufbringen eines Teilchenverbundwerkstoffs mit eingebetteten Hartstoffpartikeln, insbesondere aus kubischem Bornitrit (CBN), auf die Schaufelspitze wiederhergestellt wird. Hierdurch kann eine thermisch, chemisch und mechanisch besonders widerstandsfähige Schaufelspitzenpanzerung hergestellt werden. Beispielsweise können Hartstoffpartikel aus kubischem Bornitrit (CBN), die gegebenenfalls zusätzlich mit einem Aktivelement beschichtet sind, aufgebracht werden. Zur besseren Anhaftung können die Hartstoffpartikel in eine umschließende Matrix, beispielsweise aus einem Lotmaterial, eingebettet werden, wodurch sich eine besonders stabile Verbindung der Hartstoffpartikel mit der Schaufelspitze ergibt. Der Teilchenverbundwerkstoff kann unmittelbar auf der Turbinenschaufel erzeugt oder zunächst getrennt von dieser hergestellt, auf die Turbinenschaufel aufgebracht und mit dieser verbunden werden.

Weitere Vorteile ergeben sich, indem die Schaufelbeschichtung mittels eines Beschichtungsverfahrens, insbesondere durch Diffusionsbeschichten, wiederhergestellt wird. Hierdurch kann der zuvor entfernte Teil der Schaufelbeschichtung lokal wiederhergestellt und mit besonders hohem Heißgaskorrosions- und -oxidationsschutz hergestellt werden. Für das Wiederherstellen der Schaufelbeschichtung können verschiedene Verfahren, vorzugsweise Touch-up Slurry-Beschichtungsverfahren, chemische Abscheidung und Diffusion aus der Dampfphase (CVD-Verfahren), Pulver-Packbeschichtungsverfahren oder andere verwendet werden.

Ein zweiter Aspekt der Erfindung betrifft eine Vorrichtung zum Durchführen eines Verfahrens gemäß dem ersten Erfindungsaspekt. Die Vorrichtung umfasst hierzu eine erste Trenneinrichtung, welche dazu ausgebildet ist, ein Schaufelspitzenpanzerung der Turbinenschaufel zumindest im Bereich der beschädigten Schaufelspitze zu entfernen und eine Reparaturoberfläche herzustellen, eine erste Reparatureinrichtung, welche dazu ausgebildet ist die Schaufelspitzenpanzerung wiederherzustellen, und eine zweite Reparatureinrichtung, welche dazu ausgebildet ist die Schaufelbeschichtung im Bereich der reparierten Schaufelspitze wiederherzustellen. Erfindungsgemäß weist die Vorrichtung zusätzlich eine zweite Trenneinrichtung, welche dazu ausgebildet ist, nur einen Teil der Schaufelbeschichtung der Turbinenschaufel im Bereich der Reparaturoberfläche unter Erhalt eines von der Reparaturoberfläche beabstandeten Teils der Schaufelbeschichtung zu entfernen, und eine dritte Reparatureinrichtung, welche dazu ausgebildet ist, ein Reparaturmaterial durch ein Schweißverfahren und/oder durch ein additives Fertigungsverfahren auf die Reparaturoberfläche aufzubringen und eine Soll-Kontur der Schaufelspitze wiederherzustellen, auf. Mit Hilfe der erfindungsgemäßen Vorrichtung können beschädigte Schaufelspitzen von gepanzerten und beschichteten Turbinenschaufeln schnell und zuverlässig repariert werden. Durch die dritte Reparatureinrichtung kann die ursprüngliche Geometrie der Turbinenschaufel - beispielsweise in Abhängigkeit des Schadensbilds und der geforderten Endgeometrie - bedarfsweise vollständig wiederhergestellt werden. Im Unterschied zum Stand der Technik kann dabei auf mehrere Schritte und insbesondere auf das vollständige Entschichten und das spätere vollständige Wiederbeschichten der Turbinenschaufel verzichtet werden, so dass Zeit und Kosten in erheblichem Maße eingespart werden. Da zudem nur ein geringer Teil der Schaufelbeschichtung, die auch Airfoil-Coating bezeichnet wird, in der Nähe der Reparaturoberfläche zu entfernen ist, ist die Reparatur der gepanzerten Schaufelspitze nicht mit einem Wanddicken- und Festigkeitsverlust des Schaufelblatts verbunden, wodurch die Anzahl möglicher Reparaturen und damit die Lebensdauer der Turbinenschaufel erheblich gesteigert werden, was zu weiteren erheblichen Zeit- und Kosteneinsparungen führt. Ein weiterer Vorteil besteht in einem besseren Laufzeitverhalten der lokal reparierten Turbinenschaufel infolge der vergleichsweise schonend durchgeführten Reparatur. Dabei kann grundsätzlich vorgesehen sein, dass zwei oder mehr Trenn- und/oder Reparatureinrichtungen integriert ausgebildet sind, so dass die betreffende integrierte Trenn- bzw. Reparatureinrichtung dazu ausgebildet ist, zwei oder mehr der genannten Verfahrensschritte auszuführen. Unter dem Begriff "ausgebildet zu" sind im Rahmen der vorliegenden Offenbarung generell Einrichtungen zu verstehen, die nicht nur eine grundsätzliche Eignung für die betreffende Handlung aufweisen, sondern die konkret hard- und/oder softwarebasiert derart eingerichtet sind, dass sie die betreffende Handlung auch tatsächlich ausführen. Die Vorrichtung kann grundsätzlich eine Steuervorrichtung aufweisen, mittels welcher die einzelnen Trenn- und/oder Reparatureinrichtungen zu steuern und/oder zu regeln sind. Die Steuervorrichtung weist hierzu eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein. Weitere Merkmale und deren Vorteile sind den Beschreibungen des ersten Erfindungsaspekts zu entnehmen, wobei vorteilhafte Ausgestaltungen des ersten Erfindungsaspekts als vorteilhafte Ausgestaltungen des zweiten Erfindungsaspekts und umgekehrt anzusehen sind.

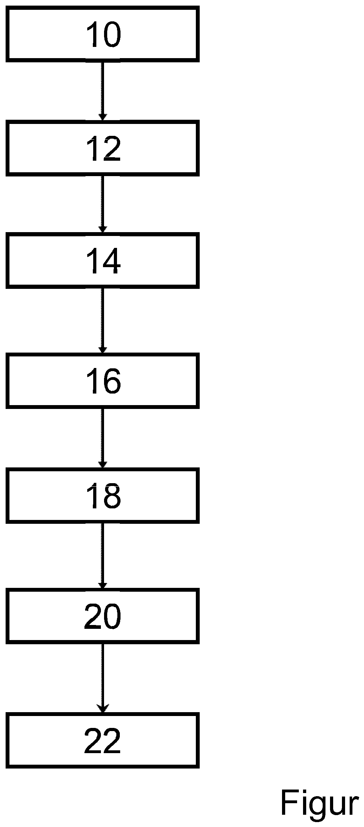

Weitere Merkmale der Erfindung ergeben sich aus den Ansprüchen, der Figur und der Figurenbeschreibung. Dabei zeigt die einzige Figur ein Ablaufdiagramm eines erfindungsgemäßen Verfahrens zum Reparieren einer beschädigten Schaufelspitze einer gepanzerten und mit einer Schaufelbeschichtung versehenen Turbinenschaufel.

Die einzige Figur zeigt ein Ablaufdiagramm eines erfindungsgemäßen Verfahrens zum Reparieren einer beschädigten Schaufelspitze einer gepanzerten und mit einer Schaufelbeschichtung versehenen Turbinenschaufel, beispielsweise einer Hochdruckturbinenschaufel (HPT Blade). In einem ersten Schritt 10 wird die beschädigte Turbinenschaufel bereitgestellt und für die Reparatur vorbereitet. Hierzu wird in Schritt 12 die Schaufelspitzenpanzerung der Turbinenschaufel zumindest im Bereich der beschädigten Schaufelspitze entfernt und eine Reparaturoberfläche hergestellt. Dies kann beispielsweise durch spanende Bearbeitung wie etwa Schleifen erfolgen. In Schritt 14 wird die Schaufelbeschichtung (Airfoil-Coating) der Turbinenschaufel lediglich im Bereich der Reparaturoberfläche unter Erhalt eines von der Reparaturoberfläche beabstandeten Teils der Schaufelbeschichtung entfernt, um die Turbinenschaufel für eine anschließende Schweißung (Schritt 16) vorzubereiten. Auch dieser Schritt kann beispielsweise durch eine spanende Bearbeitung erfolgen. Das Reparaturverfahren verzichtet also auf das vollständige Entschichten der Turbinenschaufel und führt somit nicht zu einem Verlust an Wanddicke und Festigkeit insbesondere des im Betrieb hoch belasteten Schaufelblattes. Damit ist die Reparatur wesentlich schonender für das Bauteil und kann ohne Probleme mehrfach an ein und derselben Turbinenschaufel durchgeführt werden.

Im folgenden Schritt 16 wird Reparaturmaterial durch Auftragsschweißen auf die Reparaturoberfläche aufgebracht und in einem grundsätzlich optionalen Schritt 18 spanend rekonturiert (z. B. durch Schleifen), um eine Original- oder Soll-Kontur der Schaufelspitze wiederherzustellen. Wenn in Schritt 16 bereits die gewünschte Kontur der Schaufelspitze hergestellt wurde, ist Schritt 18 nicht erforderlich. Sollte das Schadensbild im Einzelfall keinen Wiederaufbau mit Reparaturmaterial erfordern, kann generell auch Schritt 16 entfallen.

In Schritt 20 wird dann die Schaufelspitzenpanzerung durch einen vorzugsweise ebenfalls nur lokal auf die Turbinenschaufel wirkenden Schritt, z. B. durch lokales Löten, wieder hergestellt. Die Schaufelspitzenpanzerung kann beispielsweise aus kubischem Bornitrit (CBN), welches in eine Matrix eingebettet wird, hergestellt werden.

Zum Abschluss der Reparatur wird in Schritt 22 durch eine lokal begrenzte "Auffrischungs"-("touch-up"-)Diffusionsbeschichtung die Schaufelbeschichtung im Bereich der reparierten Schaufelspitze und damit der Schutz der Turbinenschaufel vor thermischen und chemischen Einflüssen wieder hergestellt.

Mit der vorgeschlagenen Vorgehensweise kann auf mehrere Schritte, insbesondere auf das vollständige Entschichten und das spätere Wiederbeschichten des Schaufelblattes verzichtet werden, so dass Zeit und Kosten in erheblichem Maße eingespart werden. Neben einer Verminderung der Schrottraten von gepanzerten Turbinenschaufeln, insbesondere von HPT Blades, und den damit verbundenen, sehr hohen Kosteneinsparungen wird auch ein besseres Laufzeitverhalten der nur lokal reparierten Turbinenschaufel infolge einer schonend durchgeführten Reparatur in Verbindung mit vergleichsweise geringen Reparaturkosten erreicht.

Die in den Unterlagen angegebenen Parameterwerte zur Definition von Prozess- und Messbedingungen für die Charakterisierung von spezifischen Eigenschaften des Erfindungsgegenstands sind auch im Rahmen von Abweichungen - beispielsweise aufgrund von Messfehlern, Systemfehlern, Einwaagefehlern, DIN-Toleranzen und dergleichen - als vom Rahmen der Erfindung mitumfasst anzusehen.

### Bezugszeichenliste:

10 Bereitstellen einer beschädigten Turbinenschaufel
12 Entfernen einer Schaufelspitzenpanzerung der Turbinenschaufel und Herstellen einer Reparaturoberfläche
14 Entfernen einer Schaufelbeschichtung der Turbinenschaufel lediglich im Bereich der Reparaturoberfläche unter Erhalt eines von der Reparaturoberfläche beabstandeten Teils der Schaufelbeschichtung
16 Aufbringen von Reparaturmaterial auf die Reparaturoberfläche
18 Rekonturieren des Reparaturmaterials
20 Wiederherstellen der Schaufelspitzenpanzerung
22 Wiederherstellen der Schaufelbeschichtung

## Patentansprüche

1. Verfahren zum Reparieren einer beschädigten Schaufelspitze einer gepanzerten und mit einer Schaufelbeschichtung versehenen Turbinenschaufel einer thermischen Gasturbine, umfassend die Schritte:
- Entfernen einer Schaufelspitzenpanzerung der Turbinenschaufel zumindest im Bereich der beschädigten Schaufelspitze und Herstellung einer Reparaturoberfläche (12);
- Wiederherstellen der Schaufelspitzenpanzerung (20); und
- Wiederherstellen der Schaufelbeschichtung im Bereich der reparierten Schaufelspitze (22),
**dadurch gekennzeichnet, dass**
vor dem Wiederherstellen der Schaufelspitzenpanzerung (20) nur ein Teil der Schaufelbeschichtung der Turbinenschaufel in der Nähe der Reparaturoberfläche unter Erhalt eines von der Reparaturoberfläche beabstandeten Teils der Schaufelbeschichtung (14) entfernt wird und dass ein Reparaturmaterial durch ein Schweißverfahren auf die Reparaturoberfläche aufgebracht wird (14) und die Schaufelspitzenpanzerung (20) mittels Löten oder durch Erzeugen oder Aufbringen eines Teilchenverbundwerkstoffs mit eingebetteten Hartstoffpartikeln auf die Schaufelspitze wiederhergestellt wird.

2. Verfahren nach Anspruch 1,
**dadurch gekennzeichnet, dass**
vor dem Wiederherstellen der Schaufelspitzenpanzerung (20) das Reparaturmaterial auf die Reparaturoberfläche aufgebracht und eine Soll-Kontur der Schaufelspitze (16, 18) wiederhergestellt wird;

3. Verfahren nach Anspruch 1 oder 2,
**dadurch gekennzeichnet, dass**
die Schaufelspitzenpanzerung und/oder die Schaufelbeschichtung zumindest teilweise mittels eines Trennverfahrens entfernt wird (12).

4. Verfahren nach einem der Ansprüche 1 bis 3,
**dadurch gekennzeichnet, dass**
das Reparaturmaterial durch Auftragsschweißen auf die Reparaturoberfläche aufgebracht wird (14).

5. Verfahren nach einem der Ansprüche 1 bis 4,
**dadurch gekennzeichnet, dass**
die Schaufelbeschichtung nur bis zu einem Abstand von maximal 15 % der Höhe des Schaufelblatts zur Reparaturoberfläche entfernt wird (12).

6. Verfahren nach einem der Ansprüche 1 bis 5,
**dadurch gekennzeichnet, dass**
die Soll-Kontur der Schaufelspitze nach dem Aufbringen des Reparaturmaterials mittels eines Trennverfahrens wiederhergestellt wird (18).

7. Verfahren nach einem der Ansprüche 1 bis 6,
**dadurch gekennzeichnet, dass**
die Schaufelspitzenpanzerung mittels Löten, und durch Erzeugen oder Aufbringen eines Teilchenverbundwerkstoffs aus kubischem Bornitrit (CBN) auf die Schaufelspitze wiederhergestellt wird (20).

8. Verfahren nach einem der Ansprüche 1 bis 7,
**dadurch gekennzeichnet, dass**
die Schaufelbeschichtung mittels eines Beschichtungsverfahrens, insbesondere durch Diffusionsbeschichten, wiederhergestellt wird (22).

9. Vorrichtung zum Durchführen eines Verfahrens nach einem der Ansprüche 1 bis 8, umfassend:
- eine erste Trenneinrichtung, welche dazu ausgebildet ist, ein Schaufelspitzenpanzerung der Turbinenschaufel zumindest im Bereich der beschädigten Schaufelspitze zu entfernen und eine Reparaturoberfläche herzustellen;
- eine erste Reparatureinrichtung, welche dazu ausgebildet ist die Schaufelspitzenpanzerung wiederherzustellen;
- eine zweite Reparatureinrichtung, welche dazu ausgebildet ist die Schaufelbeschichtung im Bereich der reparierten Schaufelspitze wiederherzustellen, eine zweite Trenneinrichtung, welche dazu ausgebildet ist, nur einen Teil der Schaufelbeschichtung der Turbinenschaufel in der Nähe der Reparaturoberfläche unter Erhalt eines von der Reparaturoberfläche beabstandeten Teils der Schaufelbeschichtung zu entfernen, und eine dritte Reparatureinrichtung, welche dazu ausgebildet ist, Reparaturmaterial durch ein Schweißverfahren auf die Reparaturoberfläche aufzubringen und eine Soll-Kontur der Schaufelspitze wiederherzustellen.

## Claims

1. Method for repairing a damaged blade tip of an armor-plated turbine blade, provided with a blade coating, of a thermal gas turbine, comprising the steps of:
- removing a blade tip armor plating of the turbine blade at least in the region of the damaged blade tip, and producing a repair surface (12);
- restoring the blade tip armor plating (20); and
- restoring the blade coating in the region of the repaired blade tip (22),
**characterized in that**
prior to restoring the blade tip armor plating (20), only a part of the blade coating of the turbine blade in the vicinity of the repair surface is removed, while maintaining a part of the blade coating (14) spaced apart from the repair surface, and **in that** a repair material is applied to the repair surface by a welding process (14) and the blade tip armor plating (20) is restored by means of soldering or by producing or applying a particle composite material with embedded hard material particles to the blade tip.

2. Method according to claim 1,
**characterized in that**
prior to restoring the blade tip armor plating (20), the repair material is applied to the repair surface and a desired contour of the blade tip (16, 18) is restored.

3. Method according to claim 1 or 2,
**characterized in that**
the blade tip armor plating and/or the blade coating is at least partially removed by means of a separation process (12).

4. Method according to any of claims 1 to 3,
**characterized in that**
the repair material is applied to the repair surface by deposition welding (14).

5. Method according to any of claims 1 to 4,
**characterized in that**
the blade coating is removed only to a maximum distance of 15% of the height of the airfoil from the repair surface (12).

6. Method according to any of claims 1 to 5,
**characterized in that**
the desired contour of the blade tip is restored by means of a separation process after the application of the repair material (18).

7. Method according to any of claims 1 to 6,
**characterized in that**
the blade tip armor plating is restored by means of soldering and by producing or applying a particle composite material made of cubic boron nitride (CBN) to the blade tip (20).

8. Method according to any of claims 1 to 7,
**characterized in that**
the blade coating is restored by means of a coating process, in particular by diffusion coating (22).

9. Device for carrying out a method according to any of claims 1 to 8, comprising:
- a first separating apparatus which is designed to remove a blade tip armor plating of the turbine blade at least in the region of the damaged blade tip, and to produce a repair surface;
- a first repair apparatus which is designed to restore the blade tip armor plating;
- a second repair apparatus which is designed to restore the blade coating in the region of the repaired blade tip,
a second separating apparatus which is designed to remove only a part of the blade coating of the turbine blade in the vicinity of the repair surface, while maintaining a part of the blade coating spaced apart from the repair surface, and a third repair apparatus which is designed to apply repair material to the repair surface by a welding process and to restore a desired contour of the blade tip.

## Revendications

1. Procédé permettant la réparation d'une pointe d'aube endommagée d'une aube de turbine d'une turbine à gaz thermique, laquelle aube de turbine est blindée et pourvue d'un revêtement d'aube, comprenant les étapes consistant à :
- enlever un blindage de pointe d'aube de l'aube de turbine au moins dans la zone de la pointe d'aube endommagée et réaliser une surface de réparation (12) ;
- reconstituer le blindage de pointe d'aube (20) ; et
- reconstituer le revêtement d'aube dans la zone de la pointe d'aube réparée (22),
**caractérisé en ce que**
avant de reconstituer le blindage de pointe d'aube (20), seule une partie du revêtement d'aube de l'aube de turbine est enlevée à proximité de la surface de réparation tout en conservant une partie du revêtement d'aube (14) espacée de la surface de réparation, et **en ce qu'**un matériau de réparation est appliqué (14) sur la surface de réparation par un procédé de soudage et le blindage de pointe d'aube (20) est reconstitué par brasage ou par production ou application sur la pointe d'aube d'un matériau composite particulaire dans lequel sont noyées des particules de matériau dur.

2. Procédé selon la revendication 1,
**caractérisé en ce que**
avant la reconstitution du blindage de pointe d'aube (20), le matériau de réparation est appliqué sur la surface de réparation et un contour de consigne de la pointe d'aube (16, 18) est reconstitué ;

3. Procédé selon la revendication 1 ou 2,
**caractérisé en ce que**
le blindage de pointe d'aube et/ou le revêtement d'aube sont enlevés (12) au moins partiellement au moyen d'un procédé de séparation.

4. Procédé selon l'une des revendications 1 à 3,
**caractérisé en ce que**
le matériau de réparation est appliqué (14) sur la surface de réparation par soudage par rechargement.

5. Procédé selon l'une des revendications 1 à 4,
**caractérisé en ce que**
le revêtement d'aube n'est enlevé que jusqu'à une distance de 15 % au maximum de la hauteur de la pale d'aube par rapport à la surface de réparation (12).

6. Procédé selon l'une des revendications 1 à 5,
**caractérisé en ce que**
le contour de consigne de la pointe d'aube est reconstitué (18) après l'application du matériau de réparation au moyen d'un procédé de séparation.

7. Procédé selon l'une des revendications 1 à 6,
**caractérisé en ce que**
le blindage de pointe d'aube est reconstitué (20) par brasage, et par production ou application d'un matériau composite particulaire en nitrure de bore cubique (CBN) sur la pointe d'aube.

8. Procédé selon l'une des revendications 1 à 7,
**caractérisé en ce que**
le revêtement d'aube est reconstitué (22) au moyen d'un procédé de revêtement, en particulier par revêtement par diffusion.

9. Dispositif pour la mise en oeuvre d'un procédé selon l'une des revendications 1 à 8, comprenant :
- un premier appareil de séparation, lequel est conçu pour enlever un blindage de pointe d'aube de l'aube de turbine au moins dans la zone de la pointe d'aube endommagée et pour réaliser une surface de réparation ;
- un premier appareil de réparation, lequel est conçu pour reconstituer le blindage de pointe d'aube ;
- un deuxième appareil de réparation, lequel est conçu pour reconstituer le revêtement d'aube dans la zone de la pointe d'aube réparée,
un second appareil de séparation, lequel est conçu pour enlever seulement une partie du revêtement d'aube de l'aube de turbine à proximité de la surface de réparation tout en conservant une partie du revêtement d'aube espacée de la surface de réparation, et un troisième appareil de réparation, lequel est conçu pour appliquer un matériau de réparation sur la surface de réparation par un procédé de soudage et pour reconstituer un contour de consigne de la pointe d'aube.
